Europäisches Patentamt

European Patent Office

Office européen des brevets

(11) Veröffentlichungsnummer: **0 494 457 A1**

# EUROPÄISCHE PATENTANMELDUNG

(21) Anmeldenummer: **91122368.3**

(22) Anmeldetag: **30.12.91**

(51) Int. Cl.⁵: **C08K 5/01**, C08K 7/26, C09D 175/08, C08G 18/08

(30) Priorität: **09.01.91 DE 4100382**

(43) Veröffentlichungstag der Anmeldung: **15.07.92 Bulletin 92/29**

(84) Benannte Vertragsstaaten: **BE DE FR GB IT NL**

(71) Anmelder: **Rhein Chemie Rheinau GmbH Düsseldorfer Strasse 23-27 W-6800 Mannheim 81(DE)**

(72) Erfinder: **Schnepf, Wilhelm, Dipl.-Ing. Pappelstrasse 19 W-6701 Otterstadt(DE)**
Erfinder: **Schuster, Peter Stephanienufer 3 W-6800 Mannheim(DE)**

(74) Vertreter: **Gremm, Joachim, Dr. et al Bayer AG Konzernverwaltung RP Patente Konzern W-5090 Leverkusen 1, Bayerwerk(DE)**

(54) **Reaktivmasse.**

(57) Polyurethanreaktivmassen enthaltend ein NCO-Präpolymer auf Basis Diisocyanatodiphenylmethan und einem aliphatischen Polyether, ein verkapptes Diamin als Härter sowie mindestens einen aromatischen oder aliphatischen oder gemischt aliphatisch/aromatischen Kohlenwasserstoff mit mindestens 18 C-Atomen und einen Zeolith von ca. 4 Å.

Gegenstand der Erfindung ist eine Reaktivmasse auf Polyurethanbasis, die auf nassen Substraten und sogar unter Wasser härtet und sich dabei mit dem Substrat verbindet.

Die Basis der erfindungsgemäßen Masse ist ein NCO-Präpolymer und ein Kettenverlängerungsmittel (Härter). Dieser grundsätzlich bekannten Reaktiv-Masse wird erfindungsgemäß ein langkettiger Kohlenwasserstoff, der sich in dem NCO-Präpolymeren löst, und ein Zeolith zugefügt.

Bevorzugt enthält die erfindungsgemäße Masse ein NCO-Präpolymer aus einem Diisocyanatodiphenylmethan (MDI) und einem aliphatischen Polyether mit Molekulargewicht etwa 1000 bis 3000 einerseits und ein verkapptes, aliphatisches Diamin als Härter, die zusammen etwa 50 bis 75 Gew.-% der Masse ausmachen, ferner einen langkettigen Kohlenwasserstoff mit einer Kettenlänge von mindestens 18 C-Atomen in einer Menge von 10 bis 20 Gew.-% der Masse und einen Zeolith von ca. 4 Å in einer Menge von etwa 5 bis 15 Gew.-%. Daneben kann die Masse für Polyurethanbeschichtungsmassen übliche Bestandteile wie Katalysatoren, Farbstoffe, Füllstoffe in üblichen Mengen enthalten.

Zur Herstellung der Masse besonders geeignet ist ein NCO-Präpolymer auf Basis von MDI und aliphatischen Polyethern mit einer äquivalenten Menge eines Härters oder Kettenverlängerungsmittels auf Basis von Polyaminen, vorzugsweise Diaminen, die mit Ketonen zu entsprechenden Ketiminen umgesetzt werden, die bei Gegenwart von Wasser Diamine zurückbilden. Besonders geeignete Härter dieser Art sind Urethanbisoxazolidine.

Erfindungsgemäß wesentliche Zusätze sind, wie oben erwähnt, ein aromatischer oder aliphatischer oder gemischt aliphatisch/aromatischer Kohlenwasserstoff mit mindestens 18 C- Atomen, beispielsweise Dodecylbenzol, und ein Zeolith. Durch diese beiden Zusätze wird die Haftung der Masse auf nassem Untergrund sichergestellt und durch die Auswahl des Härters erreicht, daß das NCO-Präpolymer schneller mit diesem als mit Wasser reagiert.

Die erfindungsgemäßen Reaktivmassen können als Beschichtungs- oder Abdichtmittel eingesetzt werden, insbesondere da, wo mit nassen Substraten oder unter Wasser gearbeitet werden muß.

Ausführungsbeispiel

1. Herstellung einer Reaktivmasse

Komponente A:
55 Gew.-Teile eines Polyether/MDI-Präpolymer werden mit 3 Gew.-Teilen eines monofunktionellen Isocyanates, 10 Gew.-Teilen Diphenylkresylphosphat, 2 Gew.-Teilen Pigmentpaste sowie 5 Gew.-Teilen eines rheologischen Additives gemischt. In diese Mischung werden 25 Gew.-Teile eines anorganischen Füllstoffes (Kaolin) und 10 Gew.-Teile Na-Al-Silicat (Zeolith, 4 Å) eindispergiert.

Komponente B:
12 Gew.-Teile eines latenten Härters (Urethanbisoxazolidin) werden mit 4 Gew.-Teilen Diphenylkresylphosphat und 4 Gew.-Teilen eines Vernetzers auf Basis eines aromatischen Diamin gemischt.

Zur Anwendung:
100 Teile A und 20 Teile B werden intensiv homogenisiert. Nach ca. 2 min ist das Produkt für ca. 5 min. pastös. Innerhalb dieser Zeit muß das Material verarbeitet werden.

2. Anwendung der Reaktivmasse:

Mit der Reaktionsmasse können nasse Oberflächen unterschiedlichster Materialien, z,B. Bauteile aus Beton, miteinander verbunden bzw. abgedichtet werden. Auch ist die Montage von Polyurethan-Paneelen bei Regen möglich. Die Polyurethan-Platten können aufgeklebt und die Fugen abgedichtet werden.

Mit der Reaktionsmasse können auch Undichtigkeiten von Schwimmkörpern unter Wasser abgedichtet werden. Mit entsprechendem Werkzeug wird das Wasser während der Beschichtung verdrängt und die Masse auf die Oberfläche aufgetragen. Die Beschichtung härtet unter Wasser vollständig aus und haftet auf dem entsprechenden Untergrund.

Durch Einlegen eines Stützgewebes ist auch eine Armierung der Reaktionsmasse möglich.

**Patentansprüche**

1.  Polyurethanreaktivmassen enthaltend ein NCO-Präpolymer auf Basis Diisocyanatodiphenylmethan und eines aliphatischen Polyethers, ein verkapptes Diamin als Härter sowie mindestens einen aromatischen oder aliphatischen oder gemischt aliphatisch/aromatischen Kohlenwasserstoff mit mindestens 18 C-Atomen und einen Zeolith von ca. 4 Å.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 185 214 (TEROSON GMBH)<br>* Ansprüche 1,3,8,11,13 *<br>* Seite 3, Zeile 9 - Seite 4, Zeile 19 *<br>--- | 1 | C08K5/01<br>C08K7/26<br>C09D175/08<br>C08G18/08 |
| A | FR-A-2 071 413 (SOCIETE DES PEINTURES)<br>* Ansprüche 1,2 *<br>* Seite 4, Zeile 19 - Zeile 32 *<br>--- | 1 | |
| A | DE-B-1 143 634 (BAYER)<br>* Anspruch 1 *<br>* Spalte 2, Zeile 16 - Spalte 3, Zeile 16 *<br>--- | 1 | |
| A | WORLD PATENTS INDEX LATEST<br>Week 8737,<br>Derwent Publications Ltd., London, GB;<br>AN 87-260123<br>& JP-A-62 179 523 (SANYO CHEM. IND.) 6. August 1987<br>* Zusammenfassung *<br><br>----- | 1 | |
| | | | **RECHERCHIERTE SACHGEBIETE (Int. Cl.5 )**<br><br>C08K<br>C09D<br>C08G |

Der vorliegende Recherchenbericht wurde für alle Patentansprüche erstellt

| Recherchenort | Abschlußdatum der Recherche | Prüfer |
|---|---|---|
| DEN HAAG | 29 APRIL 1992 | VAN PUYMBROECK M. A. |